Europäisches Patentamt

(19) European Patent Office

Office européen des brevets

(11) Publication number: **0 095 135**
**B1**

# (12) EUROPEAN PATENT SPECIFICATION

(45) Date of publication of patent specification: **17.12.86**

(51) Int. Cl.⁴: **F 24 J 2/00**

(21) Application number: **83104883.0**

(22) Date of filing: **18.05.83**

(54) A solar collector with absorber comprising a plurality of spirally coiled tubes defining non-coincident surfaces.

(30) Priority: **21.05.82 IT 2143282**

(43) Date of publication of application:
**30.11.83 Bulletin 83/48**

(45) Publication of the grant of the patent:
**17.12.86 Bulletin 86/51**

(84) Designated Contracting States:
**CH DE FR LI**

(56) References cited:
**EP-A-0 029 951**
**CH-A- 615 501**
**DE-A-2 727 593**
**DE-A-2 730 403**
**DE-A-2 741 787**
**DE-A-2 744 022**
**US-A-2 213 894**

(73) Proprietor: **HYDRO SYSTEM S.R.L.**
**Via 5 Giornate, 1040**
**I-21042 Caronno Pertusella (Va) S.S. Varesina**
**(IT)**

(72) Inventor: **Filippetti, Lena**
**Via De Amicis 6**
**I-20020 Solaro (Milan) (IT)**

(74) Representative: **Dr. Ing. A. Racheli & C.**
**Viale San Michele del Carso, 4**
**I-20144 Milano (IT)**

Courier Press, Leamington Spa, England.

EP 0 095 135 B1

# Description

Solar collectors are known and universally used and include an absorber or receiver comprising, for example, a fret curved continuous tube, which is arranged according to a planar surface and has a fluid flowing therein and is contained within an envelope or shell forming a flat panel. Such absorbers unavoidably have wide overall sizes and accordingly the location thereof is highly binding (roof, ground, etc.). Moreover, such collectors suitably take advantage of solar radiation only when the latter is orthogonally incident on the panel plane or surface; thus, either the panel is fixed and a good exploitation of solar radiation is provided only for a few hours a day; or the use must be resorted to for expensive tracking systems to maintain as long as possible the panel perpendicular to radiation. Another disadvantage of the prior art collectors having the absorber arranged on a single surface is that such collectors provide a poor exploitation of solar radiation as the incident radiation is absorbed for a percent of about just one half of the incident energy, while a percent of about less than one half of the incident energy is reflected and thus not utilized.

A solar collector is known from DE—A—2 730 403 comprising a box having a transparent wall and groups of tubes offset one with respect to the other, and have the shape of a zig-zag within a single plane. The inner surface of the box reflects the incident rays so that the tubes can absorb them. The problem of absorbing the reflecting rays coming from the tubes themselves is not mentioned nor resolved.

The patent CH—A—615 501 also provides a box having a transparent wall and comprising groups of tubes. These are spirally coiled on a cylindrical core. The walls are also lined with a reflecting material but nothing is provided to absorb the reflection rays from the tubes themselves.

Both of these embodiments need to be orientated so as to receive the sun rays perpendicularly to their transparent surface.

The patent US—A—2 213 894 is also known in which only one spirally coiled tube, forming a conical solid surface, is contained in a cup shaped means formed by a double transparent wall. This solution has the advantage of eliminating the need to orientate the device when the incident angle of the sun rays varies; however, it does not provide any means to absorb the reflective rays from the tubes themselves.

Finally none of these solutions provide the possibility of creating within the same tubes a self-supporting structure so that the envelope can be carried out very lightly since it is not submitted to any stress.

The above mentioned objects have been achieved with a device according to the annexed claims.

Schematically and unrestrictively the accompanying drawings show some exemplary embodiments of solar collectors according to the present invention, and particularly;

Fig. 1 is a side view showing an embodiment at present preferred for the solar collector according to the invention, with part of the envelope being removed;

Fig. 2 is a sectional view taken along line 2—2 of Fig. 1;

Fig. 3 is an enlarged broken away schematic sectional view taken along line 3—3 of Fig. 2;

Fig. 3a and 3b show schematically how the sun affects the collector and the tube;

Fig. 4 is a sectional view similar to Fig. 2, showing a solar collector, wherein the coiled tube absorber is protected by a reflecting semiparabolic envelope and front transparent planar plate;

Fig. 5 is a schematic view showing an exemplary collector with tubular bundles of conical instead of cylindrical shape, as shown in Figs. 1 and 2;

Fig. 6 is a schematic horizontal sectional view showing a further exemplary collector with an absorber comprising a set of side by side coiled tubes, inserting in one another, with an envelope of substantially rectangular shape as seen in plan view;

Fig. 7 is a side view with part of the envelope cut-away, showing a solar collector with an absorber comprising coiled plastic tubes contained within a double wall envelope, with possibility of two circuit operation (water and/or drying air); and

Fig. 8 is a scheme showing the system using the collector shown in Figs. 6 and 7.

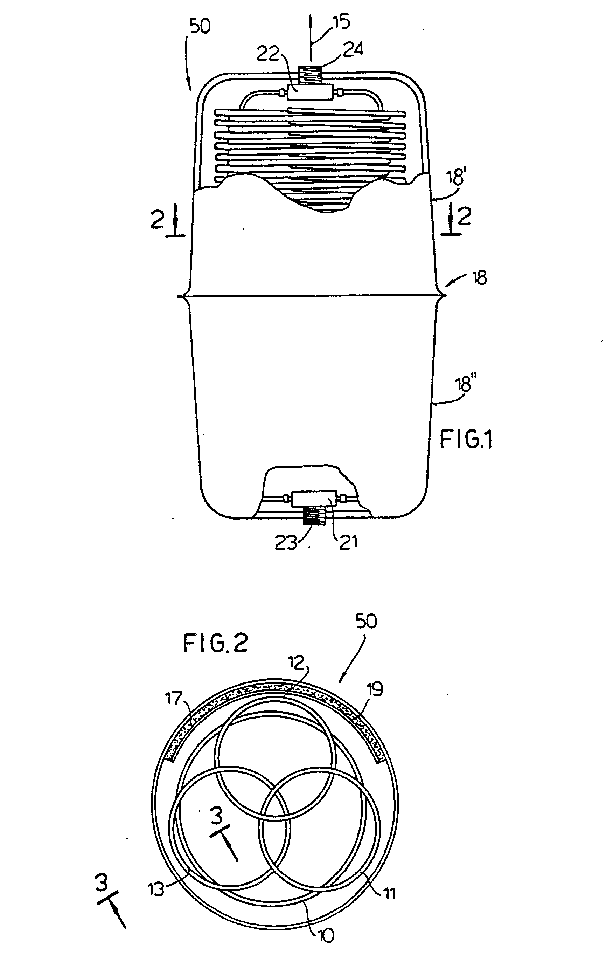

As shown in Figs. 1 and 2, a solar collector 50 according to the invention includes in its at present preferred embodiment an absorber comprising a set or bundle of spirally coiled tubes, of which one tube 10 is coiled according to a cylindrical spiral of a larger diameter and the other three tubes 11, 12 and 13 are coiled according to cylindrical spirals of a less diameter; the spiral axes are substantially parallel and vertical. In the preferred embodiments, the tube arrangement is such that the tubes are inserted between each other and each upper coil abuts on the lower coils to form a self-supporting tube bundle or nest. The tubes are made of black heat absorbing material, as it will be further specified in the following. Within the parallel or series interconnected tubes, a fluid circulation is provided. The several tubes are supplied from bottom, through a connection 21 with threaded coupling 23, and the heated fluid or liquid is withdrawn from the top at 15 by a connection 22 with threaded coupling 24 for connection with other circuit elements. The liquid is then moved to use location or into an insulated accumulator tank, not shown.

The collector of Figs. 1 and 2 comprises an envelope of transparent material to allow the passage of solar rays intended to heat the black coils 10, 11, 12 and 13 of plastic material. Heat concentration is preferably promoted by the provision of a reflective screen 17, protected at the back by an insulating layer 19. Preferably the transparent envelope is made with a double wall and is preferably made through coupling of two plastic interconnected flanged bells 18', 18". It should be noted that, although the tubes are described in the preferred embodiment as inserting between each other, as this has been found as optimal from statics and structure cheapness standpoint, it is however possible to provide collectors, wherein each tube is coiled according to a general surface and whatsoever arranged relative to the other tubes, but generally with non-coincident surfaces and preferably with axes substantially parallel to one another; of course, in this case it will be necessary to provide for supporting systems for the coils of the coiled tubes.

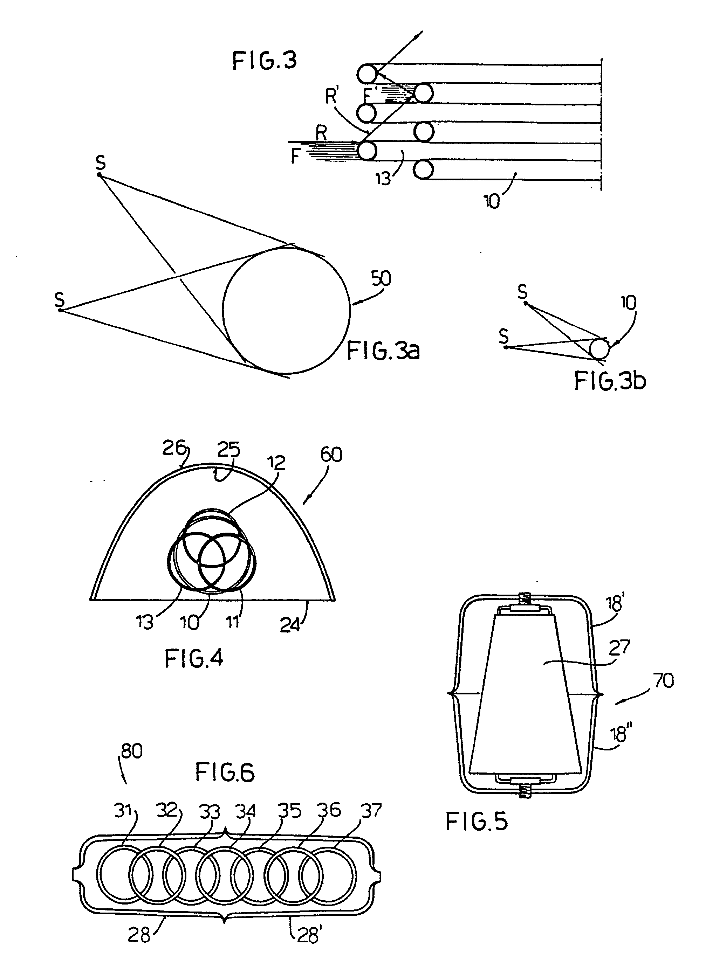

In Fig. 3 there is shown the presumed action of the solar rays on the receiver of Fig. 1. Let us consider a beam of radiations F incident on a tube section. The beam is always substantially incident on a surface of same area of the tube for various positions on the sun relative to the collector. Some rays of the beam will incide substantially at right angles to the tube surface, while other rays will incide slantwise. The energy of the incident rays is partly absorbed (for about 57%) and converted to heat, and partly reflected (about 43%). Considering an incident ray R slanting to the surface, it is partly absorbed and partly reflected, giving rise to a reflected ray R' which in the novel collector is highly likely to incide on another tube section, for example 10. Here, a partial absorption and partial reflection will occur substantially with the same percentages as above set forth, and so on. In accordance with the high number of incidences due to the high tube density in the receiver arrangement, only a very small percentage of energy could be allowed to escape from the system.

Of course, tube 10 is also struck directly by a beam of rays F. In Fig. 3a a cylindrical collector is shown which is struck by radiation of sun S on substantially equal areas, whichever can be the azimuthal position of the sun; while Fig. 3b shows that each tube is struck by solar radiation on substantially equal areas, whichever can be the elevation of the sun.

Of course, although it is preferred to use spirals of cylindrical winding, use could also be made of spirals wound according to a sphere or other general rotational surface.

The apparatus or collector 60 of Fig. 4 includes an absorber comprising a set of spiral tubes 10, 11, 12 and 13 with vertical axis similar to those of Figs. 1 and 2. The envelope, much wider on the front, that is on the side affected by the sun, comprises a transparent flat surface 24, while the back is provided with a screen 25 reflecting to the front side, that is on the receiving coils 10—13. In order to avoid heat dispersion, the back is protected by an insulating layer 26.

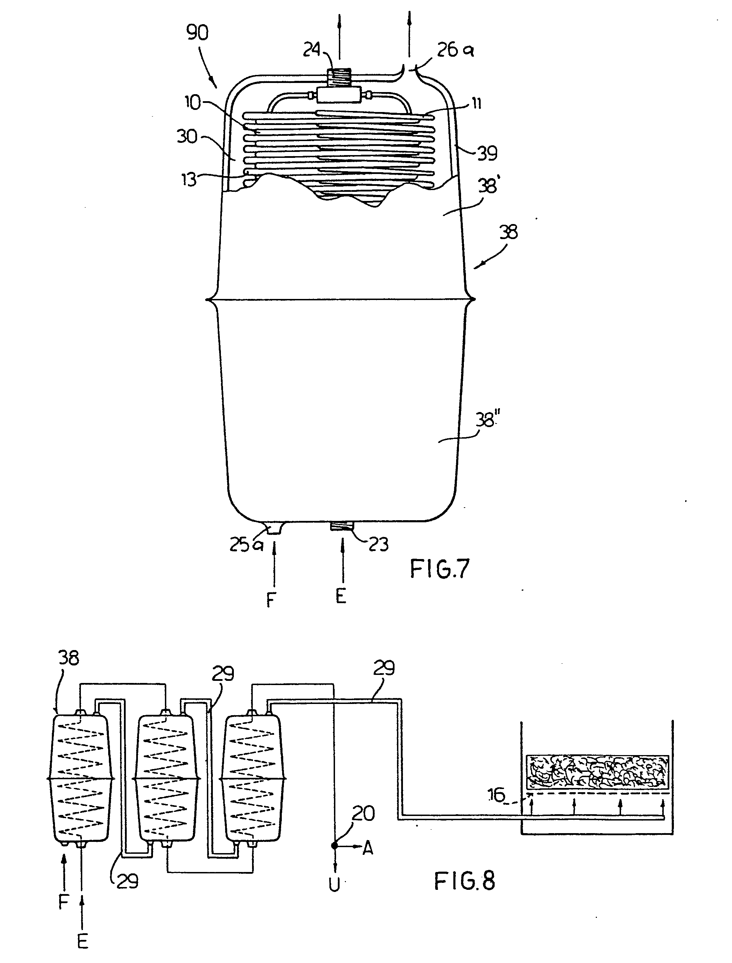

The solar collectors of this type may be series or parallel mounted to each other without any difficulty. The coiled tubes of collector 70 in Fig. 5 are spirally coiled according to a substantial conical shape 27 within a double wall envelope 18, generally of double bell 18', 18" design.

Fig. 6 is a schematic view of a collector 80 with coiled tube receiver 31 through 37, the coils of which are inserted between each other. In this case, the tube coils have coplanar axes. Such coils are contained within a double wall envelope 18, comprising bell semi-envelopes 28, 28' to form a planar solar panel.

Fig. 7 shows a collector 90 with absorber comprising a spiral or coil 10 of larger diameter and spirals or coils 11, 12 and 13 of a lower diameter to form a complete absorber of the type shown in Figs. 1 and 2. The envelope 38 with flanged bells 38', 38" comprises a double wall, in the gap 39 of which a vacuum may be created. The water or other liquid circuit passes through the tubes 10, 11, 12 and 13 (parallel or series interconnected) entering at the threaded coupling 23 and exiting from 24. The chamber or cavity 30, defined by the bell semi-envelopes 38', 38" and containing the coiled tubes 10, 11, 12 and 13 is communicated with outside by means of two openings (that is an inlet opening 25a and an outlet opening 26a), thus building up a circuit for air heating. In many uses, for example in farming, in some periods of the day use is required of hot water, in other cases use of hot air for drying. This is provided by the system according to Fig. 8, comprising three collectors 90 according to Figs. 6 and 7, the receiving circuits of which, as supplied with water, are serially interconnected. Thus, water inlet will occur in the direction of arrow E, while water outlet may occur both directly to use at location U (calf and pig feed) and at storage A as a reserve. This is controlled by a valve 20. Should hot air be required, for example for fodder drying, use can be made of the air circuit flowing through a series connected openings 25a and 26a. Thus, air enters in the direction of arrow F and exits from pipe 29 for distribution under a grate 16 supporting the material to be dried. It should be noted that for production of hot air it is not essential that the receiver tubes are internally supplied with fluid or internally contain fluid, although such tubes could also be empty.

Preferably, an absorber according to the present invention is made of mass dyed technopolymers (such as polyamide, polyester, polyolefin, fluorinated resins) whereby the black tonality remains unaltered in time with the maximum values of absorption. The black technopolymer tube according to the invention is usually extruded with circular cross-section, but the outer and/or inner surface thereof could be modified to accelerate the heat exchange between the collector and circulating fluid. For example, tip projecting bumps could be made in the tube thickness for providing longitudinal grooves parallel to the tube axis, or spiroidal. These projecting bumps achieve the result of increasing the exchange surface between the inner wall and fluid, giving rise to a mechanical homogenizing of the small circulating fluid threads to the benefit of removing calories from the receiving element by the fluid.

The prior art solar panels made of glass, rubber, metal and the like are poor in maintaining the original characteristics due to the deleterious effect of the different expansion coefficients at the presence of different temperatures. These drawbacks would create clefts and breakages with foreseeable negative effects for water seepages or losses, and formation of condensate which reflect the solar radiation.

In the present solar collector element the expansion effects do not affect at all the system, since for its prevailingly resilient structure the mass of the receiving body can compensate for any mechanical stress.

The geometrical structures of the collector may be varied by varying the diameter of the black coiled tubes, the winding diameter for the coils, the number of coils within the spiral, the coil pitch and the mutual arrangement of the coils.

The size and appearance of the outer transparent envelope can be also modified.

The bell envelopes are preferably made of polycarbonate or methyl-methacrylate and generally with material transparent to sun rays, but impervious to infrared radiation.

The fluid (liquid) circulation within the collector tubes is by natural effect without requiring any pumps; but of course pumps could be provided for particular operational conditions.

## Claims

1. A solar collector comprising an envelope (18) at least partly transparent, a chamber defined by said envelope (18) within which an absorber consisting of a group of tubes (10 to 13) offset one with respect to the other are capable of absorbing the sun rays, thus transferring the heat to the fluid which flows in said tubes (10 to 13) characterized in that the group of tubes (10 to 13) forms the external shape of a rotational solid, the coils of which intersect one another, so that any sun ray direction effects always perpendicularly a same amount of tube surface and so that any ray reflected by an absorber tube (10 to 13) has a high probability of encountering other coils of the absorber before exiting from the collector.

2. A solar collector according to claim 1, characterized in that it comprises an inlet connection (25a) to said chamber and an outlet connection (26a) from said chamber for providing a circulation of air to be heated about said tubes.

3. A solar collector according to claim 1, characterized in that said envelope (18) is in the shape of two flanged bell semi-envelopes (18', 18") connected one with the other or directly welded.

4. A solar collector according to claim 3, characterized in that said envelope (18) has a double wall with a gap, said gap being under vacuum.

5. A solar collector according to claim 1, characterized in that the tubes (10, 11, 12, 13) are mass died, for example made from heat stabilized technopolymer having a sun ray absorbing colour, such as polyolefin polymers added with heat stabilizer and U.V. absorber in addition to carbon black.

6. A solar collector according to claim 1, characterized in that the outer surface of the tubes is opaque and rough similar to an orange skin.

7. A solar collector according to claim 1, characterized in that each upper coil abuts on the lower ones to form a self-supporting tube bundle.

8. A solar collector according to claim 5, characterized in that the polymer is added with metal powder or other heat conductor components.

## Patentansprüche

1. Sonnenkollektor mit einer Hülle (18) aus wenigstens teilweise durchsichtigem Material, einer von der Hülle (18) begrenzten Kammer, in der ein aus einer Gruppe von zueinander versetzten und zur Absorption der Sonnenstrahlen geeigneten Rohren (10 bis 13) bestehender Absorber zur Abgabe der Wärme an das die Rohre (10 bis 13) durchfließende Fluid angeordnet ist, dadurch gekennzeichnet, daß die Gruppe der Rohre (10 bis 13) die äußere Form eines Rotationskörpers hat, dessen Windungen sich überschneiden, sodaß jede Richtung der Sonnenstrahlen rechtswinklig eine gleiche Oberflächenmenge der Rohre so trifft, daß jeder von einem Rohr (10 bis 13) des Absorbers reflektierte Strahl eine hohe Wahrscheinlichkeit hat, anderen Windungen des Absorbers vor dem Austritt aus dem Kollektor zu begegnen.

2. Sonnenkollektor nach Anspruch 1, dadurch gekennzeichnet, daß es einen Eingangsanschluß (25a) an der Kammer und einen Ausgangsanschluß (26a) an dieser Kammer aufweist, wodurch die Warmluftzirkulation um die Rohre verwirklicht wird.

3. Sonnenkollektor nach Anspruch 1, dadurch gekennzeichnet, daß die Hülle (18) aus zwei halben glockenförmigen, zusammengeflanschten oder geschweißten Hüllen (18, 18") gebildet ist.

4. Sonnenkollektor nach Anspruch 3, dadurch gekennzeichnet, daß die Hülle (18) doppelte Wände hat, die einen unter Vakuum gehaltenen Zwischenraum aufweisen.

5. Sonnenkollektor nach Anspruch 1, dadurch gekennzeichnet, daß die Rohre (10, 11, 12, 13) massengefärbt und beispielsweise aus einem wärmestabilisierten, technischen Polymer gebildet sind, das eine die Sonnenstrahlen absorbierende Farbe hat, beispielsweise polyolefinische mit Wärmeverfestiger und mit UV-Absorptionsmittel sowie mit Ruß legierte Polymeren.

6. Sonnenkollektor nach Anspruch 1, dadurch gekennzeichnet, daß die äußerre Oberfläche der Rohre undurchsichtig und rauh ähnlich einer Apfelsinenschale ist.

7. Sonnenkollektor nach Anspruch 1, dadurch gekennzeichnet, daß jede oben angeordnete Windung sich auf die unteren Windungen abstützt, wodurch ein selbsttragendes Rohrbündel gebildet wird.

8. Sonnenkollektor nach Anspruch 5, dadurch gekennzeichnet, daß das Polymer mit Metallpulver oder anderen gut wärmeleitenden Bestandteilen legiert ist.

**Revendications**

1. Collecteur solaire comprenant une enveloppe (18) du moins partiellement en matériel transparent, une chambre définie par ladite enveloppe (18) à l'intérieur de laquelle est placé un absorbeur consistant en un groupe de tuyaux (de 10 à 13) décalés entre eux et capables d'absorber les rayons solaires, transférant de cette manière la chaleur au fluide qui coule dans ces tuyaux (de 10 à 13), caractérisé en ce que, le groupe de tuyaux a la forme extérieure d'un solide de rotation dont les spires s'intersectent, de façon que n'importe quelle direction des rayons solaires frappe orthogonalement une même quantité de surface des tuyaux, et de sorte que n'importe quel rayon réfléchi par un tuyau (de 10 à 13) de l'absorbeur a une probabilité élevée de recontrer d'autres spires de l'absorbeur avant de sortir du collecteur.

2. Collecteur solaire d'après la revendication 1, caractérisé en ce qu'il comprend un raccordement d'entrée (25a) à cette chambre et un raccordement de sortie (26a) de ladite chambre, de façon à établir une circulation d'air qui peut se rechauffer autour de ces tuyaux.

3. Collecteur solaire d'après la revendication 1, caractérisé en ce que la susdite enveloppe (18) est formée par deux semi-enveloppes (18', 18'')

bridés à cloche couplés entre eux ou directement soudés.

4. Collecteur solaire d'après la revendication 3, caractérisé en ce que ladite enveloppe (18) a des parois doubles avec interstice maintenu sous vide.

5. Collecteur solaire d'après la revendication 1, caractérisé en ce que les tuyaux (10, 11, 12, 13) sont colorés en masse, par exemple formés par une technopolymère stabilisé à la chaleur ayant une couleur qui absorbe les rayons de solei, tels que polymères de polioléfine adjoints de stabilisants à la chaleur et absorbeur U.V. ajouté à noir de charbon.

6. Collecteur solaire d'après la revendication 1, caractérisé en ce que la surface extérieure des tuyaux est opaque et rêche de façon ressemblant à l'écorce d'une orange.

7. Collecteur solaire d'après la revendication 1, caractérisé en ce que chaque spire disposée dans la partie supérieure appuie sur les spires inférieures, de façon à former un faisceau de tuyaux autoportants.

8. Collecteur solaire d'après la revendication 5, caractérisé en ce que le polymère est adjoint de poudre de métaux ou d'autres composants conducteur de chaleur.

0 095 135

FIG.1

FIG.2

0 095 135

FIG.3

R'  F'
R
F
13
10

S
S
50
FIG.3a

S
S
10
FIG.3b

26  25  12  60
13  10  11  24
FIG.4

18'
27
70
18"
FIG.5

80
FIG.6
31  32  33  34  35  36  37
28  28'

FIG.7

FIG.8